# EUROPEAN PATENT APPLICATION

(11) **EP 3 235 466 A1**
(43) Date of publication of application: **25.10.2017**
(21) Application number: 17020156.0
(22) Date of filing: 19.04.2017
(51) Int. Cl.: A61C 8/00, A61C 5/62

(54) **FLUID DYNAMIC SINUS LIFT DEVICE**

(30) Priority: 21.04.2016 IT UA20162795
(71) Applicant: Scarano, Alessandro, 72021 Francavilla Fontana (BR) (IT)
(72) Inventor: Scarano, Alessandro, 72021 Francavilla Fontana (BR) (IT)
(74) Representative: Cornacchia, Pierluigi

(57) **Abstract**

The present patent aims to protect an invention whose object is a dental device. Such device's goal is to get the atraumatic dissection of the Schneider membrane in order to reach a sinus elevation.

The goal has been reached through the creation of a tool that overcome the current state of the art being a non-invasive device that eliminates the use of surgical instruments such as cutters and/or osteotomies.

## Description

The present patent aims to protect an invention whose object is a dental device. Such device's goal is to get the atraumatic dissection of the Schneider membrane in order to reach a sinus elevation.

The current state of technology already provides with different techniques and tools for obtaining the sinus elevation.

For example, the invention known as WO2010/055479A1 describes a dental device whose purpose is to improve the existing technology in order to facilitate the insertion of one or more dental implants.

However, such a solution has the inconvenient of not, directly and surgically, joining the maxillary sinus but it is just limited to facilitate the insertion of a liquid that will allow the operation of sinus elevation.

Consequently, that item is still characterized by the use of a cutter and / or other instruments which are meant to create the access of the liquid whose action begins at a second and distinct time interval.

Other two solutions are displayed in the following patents US20060172255A1 and US20160074140A1.

Both of the mentioned patents have in common (as previously discussed) a solution for "sinus-lift osteotomy" namely for maxillary sinus elevation but their access to the maxillary sinus is made by screwing.

The mentioned rotating tools as well as those ones classified as traditional osteotomes are characterized by some limits related to existing technique which consists of using the maxillary sinus crestale elevation through an excessive voltage on the membrane, which is detached and raised by the direct action of the above mentioned solid surgical instruments (osteotomes or steel cutters) which are maneuvered by the surgeon operator directly on the membrane by folding it up in the vertical direction and at the point of insertion of the instruments only.

Such maneuvers may cause the membrane perforation which has an average thickness of just 0.3-0.8 mm, with the consequent release of the biomaterial within the breast and with the further failure of the regenerative technique as well as an increased risk of post-operative infectious complications such as swelling and/or bruising.

At the same time these instruments involve a surgical risks for the operator such as, for example, a dissection of vessels and infections. Last but not least, the major inconvenience is related to the excessive suffering for the patient. As a consequence of the above, the main goal of this invention is to reach the sinus membrane avoiding the use of invasive and painful surgical instruments. Another purpose is to unstick and raise the membrane with the same tool and during the same procedure without time intervals due to the change of tool which, as mentioned above, involves an increase of the risks and it is likely to compromise the success of the operation itself.

Additional features and advantages of this invention will be better illustrated through an analitycal description of the preferred embodiment but not limited to the attached drawings which are described as follows:
Figure n. 1 illustrates the side section of the tool made of hollow steel (1) that acts as a terminal, a circular section and a diameter that varies along its major axis;
Figure n. 2 illustrates a different embodiment of the strument which is seen in its entirety and in every detail; more precisely, it is possible to highlight the long handle (2) at the end of which there is a head (6) which can be fixed or removable. If removable, the head keeps fixed position thanks to the metal thorns (4,5) which are assembled on the handle (2). These pieces are then kept each other thanks to a threaded Striped collar (7). Upon completion of the device, there are fittings (3) to connect the syringe (8);
Fig. N. 3 instead represents the device in one of its ideal configurations which makes it "ready to use".

The device described above allows, therefore, the atraumatic detachment of Schneider's membrane to obtain a maxillary sinus lift by taking advantage of the fluid pressure of a biomaterial fluid submitted under the same membrane instead of using a manual metallic surgical tools which already exist such as osteotomes or drills.

The use of the invented device reduces significantly the risk of perforation of the membrane by exploiting the indirect action of the biomaterial fluid.

The aim is achieved through a slight percussion and consequent insertion of the instrument into a single millimeter in the maxillary sinus under the membrane, therefore it is proving to be extremely safe for the integrity of the membrane itself.

Following this, and without any pause, with the same instrument, the plunger of the syringe would be activated or in a variant of a metering pump calibration that would inject the biomaterial fluid with a perfectly modulated pressure in function of the membrane resistance to be able to oppose to disconnection. This would keep it always in the security range for a safe breakdown. According to the Pascal principle, the fluid would elevate the membrane in the three dimensions of the space: vertically, horizontally and deeply; constantly reducing the pressure and tension applied to it over traditional methods, thus generating a wider, effective and safer disconnection.

This simplifies and makes the current procedures quicker by reducing the operating time and the number of steps as well as making technique repeatable and predictable in any condition.

In fact, this tool has the advantage of not having to come close to the breast membrane or with rotating or ultrasonic instruments before inserting biomaterials, and is a remarkable advantage, considering that this action is exercised at the bottom of a deep bone canal up to 8-10 mm and therefore with limited or absent visibility.

In addition, once penetrated into the jawbone up to 1 mm with its rounded and atraumatic end portion the device will continue to dispense, controlling the pressure and velocity, directly the fluid biomaterial which will detach and lift the membrane leaving it intact.

During the procedure, it will be possible to check the effectiveness of the execution with a simple intraoral X-ray that will confirm the integrity of the membrane.

Depending on the continuity equation, the sliding speed of the liquid is reduced as the gap disappears in the three dimensions, creating an increasingly delicate detachment.

It has thus been shown that the invention achieves the intended task and objectives. A tool has been developed to overcome the current state of the art as a non-invasive site that eliminates the use of surgical instruments such as cutters and / or osteotomies.

In addition, the two operations such as the drilling of the sinus and the lift of the same are done in a single procedure with time savings and greater safety and success of the intervention.

Variations may be made in the present invention which, if they fall within the scope of the claims below, should be considered protected by the present patent.

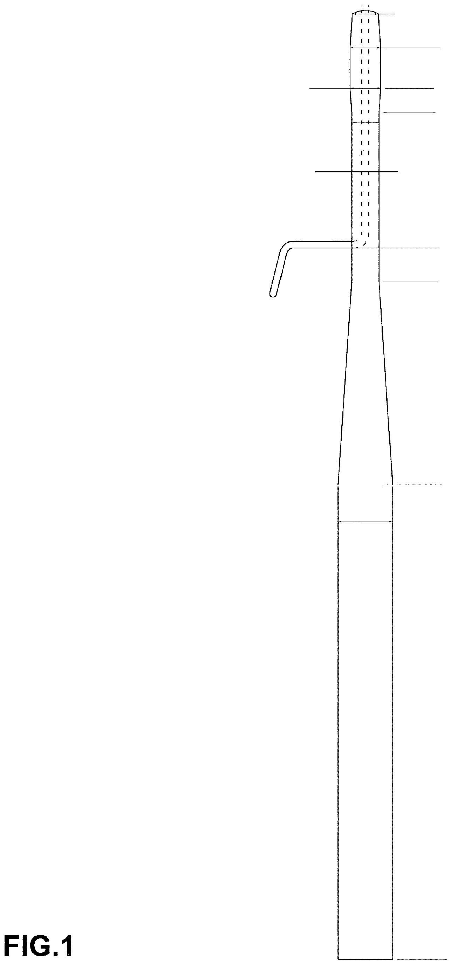

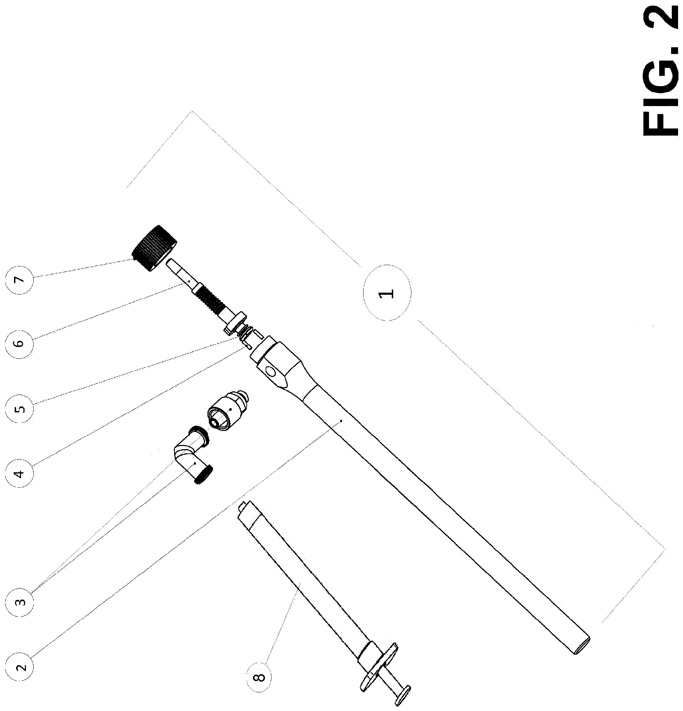

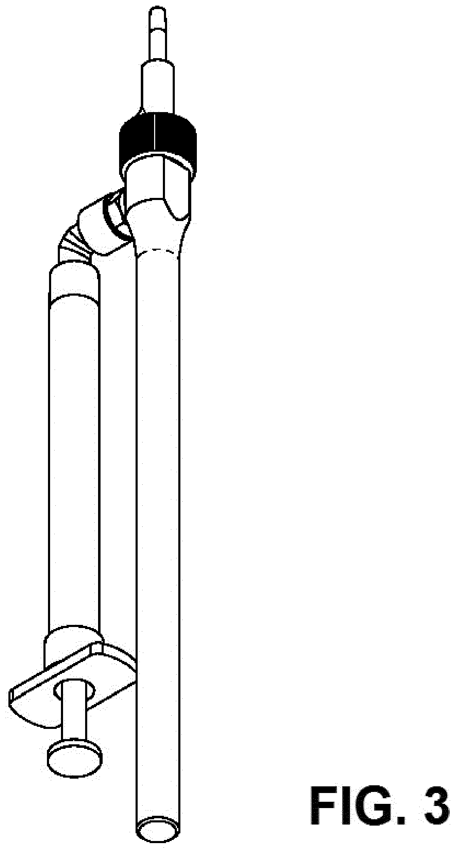

## Claims

1. Dental device (1) **characterized by** a handle (2), a circular section cable terminal preferably made of steel (6), and by a connection (10) connected to the same through appropriate fittings (3) for the insertion of bioliquid material.
